# EUROPÄISCHE PATENTSCHRIFT

(11) **EP 2 440 341 B1**
(45) Veröffentlichungstag und Bekanntmachung des Hinweises auf die Patenterteilung: **09.08.2017**
(21) Anmeldenummer: 10730703.5
(22) Anmeldetag: 11.06.2010
(51) Int. Cl.: B21C 23/14

(54) **VERFAHREN UND VORRICHTUNG ZUR HERSTELLUNG LÄNGLICHER BAUTEILE AUS METALL MIT WENDELFÖRMIGEN NUTEN, INSBESONDERE SPIRALBOHRER ODER SCHNECKEN**
METHOD AND DEVICE FOR PRODUCING ELONGATED METAL COMPONENTS HAVING HELICAL GROOVES, SUCH AS TWIST DRILLS OR WORM SCREWS
PROCÉDÉ ET DISPOSITIF DE FABRICATION DE PIÈCES ALLONGÉES EN MÉTAL POURVUES DE RAINURES HÉLICOÏDALES, EN PARTICULIER DES FORETS HÉLICOÏDAUX OU DES VIS SANS FIN

(30) Priorität: 12.06.2009 DE 102009025161
(43) Veröffentlichungstag der Anmeldung: 18.04.2012
(73) Patentinhaber: Sieber Forming Solutions GmbH, 24558 Henstedt-Ulzburg (DE)
(72) Erfinder: GENSERT, Hilmar, 04849 Bad Düben (DE)
(74) Vertreter: Patentanwälte Bals & Vogel
(86) Internationale Anmeldenummer: PCT/EP2010/003533
(87) Internationale Veröffentlichungsnummer: WO 2010/142458

(56) Entgegenhaltungen:
- EP-A1- 1 593 442
- EP-A2- 0 865 847
- DE-C- 224 576
- US-B1- 6 402 439

## Beschreibung

Die Erfindung bezieht sich auf ein Verfahren zur Herstellung länglicher Bauteile aus Metall mit wendelförmigen Nuten, insbesondere Spiralbohrer oder Schnecken, sowie eine zur Durchführung des Verfahrens geeignete Vorrichtung.

Bohrer üblicher Ausführung besitzen an ihrer Spitze mindestens zwei Schneiden, die von dem zu bearbeitenden Material einen Span oder Bohrmehl (Stein, Beton) abnehmen. Zur Abführung der Späne oder des Bohrmehles hat der Bohrer wendelförmig eingearbeitete Nuten, über die die Späne oder das Bohrmehl entgegen der Vorschubrichtung transportiert werden. Am Ende des Bohrers befindet sich ein zylinderförmiger oder mehrkantiger oder speziell geformter Schaft zum Einspannen in ein Spannfutter, beispielsweise einer Bohrmaschine oder Bohrhammer.

Bohrer, wie z.B. Spiral- oder Wendelbohrer, werden in an sich bekannter Art aus Vollmaterial, vorzugsweise Stahl, hergestellt, wobei die wendelförmigen Nuten durch spanabhebende Bearbeitung oder Umformvorgänge wie Rollen bzw. Kalt- oder Warmwalzen erzeugt werden, wobei die Herstellungstechnologien in Abhängigkeit vom Verwendungszweck der Bohrer unterschiedlich sind. Die an der Spitze bzw. am Kopf der Bohrer befindlichen Schneiden können ggf. noch mit Hartmetallplättchen bestückt werden.

Aus der Praxis sind z.B. folgende Bearbeitungsverfahren zur Herstellung von Bohrern bekannt:
Steinbohrer mit Hammerkopf werden durch Pressen, anschließendes Walzen der wendelförmigen Nuten oder durch Pressen und anschließendes Fräsen bzw. Schleifen der Nuten oder nur durch Fräsen oder Schleifen hergestellt.

Die wendelförmigen Nuten für Steinbohrer mit zylindrischem Schaft werden auf einen zylindrischen Rohling gewalzt oder durch Fräsen und Schleifen erzeugt.

Zur Herstellung von Bohrern mit zylindrischem Schaft aus Werkzeugstahl werden die wendelförmigen Nuten in einen gehärteten zylindrischen Rohling geschliffen oder durch Warmwalzen in Längsrichtung und anschließendes Härten und Schleifen gebildet.

Spiralen können durch Verdrehen von längs profilierten Rohlingen erzeugt werden. Die Herstellung der Bohrer nach vorgenannten Verfahren ist zeitaufwendig und kostenintensiv.

Aus der EP 0 865 847 B1 ist ein Verfahren zur Herstellung eines Bohrers bekannt. Ausgehend von einem Rohling mit einer Querschnittsform als Zwei-, Drei- oder Vierkant wird der Rohling an seinem Schaft eingespannt und an dem Bohrkopf verdreht, ggf. unter Zug, wodurch eine spiralförmige Wendel mit einer Bohrmehlabfuhrnut entsteht. Die Herstellung kann durch Kalt- oder Warmverformung erfolgen. Durch den Drehvorgang verkürzt sich die Länge des Bohrers unter gleichzeitiger Zunahme des Durchmessers sowie einer Kissenverformung. Schnecken im Sinne der eingereichten Erfindung sind aus Metall, insbesondere Stahl, bestehende Förder- oder Dosierschnecken kleinerer Bauart und Schnecken als Kraftübertragungselemente. Förder- oder Dosierschnecken besitzen in der Regel einen zylinderförmigen Schaft mit wendelförmigen Nuten zum Transport des Fördergutes. Die Herstellungsverfahren für vorgenannte Schnecken sind in etwa analog wie die zur Herstellung von Bohrern.

Aus der gattungsgemäßen DE 224576 ist ein Verfahren und eine Vorrichtung zur Herstellung von Spiralbohrern bekannt, wobei als Rohling ein auf helle Rotglut oder auf Weißglut erhitzter und daher formbarer Stahlblock verwendet wird. Bei diesem seit über einem Jahrhundert bekannten Verfahren wird der Rohling, um überhaupt verformbar zu sein, auf eine Temperatur von über 900°C erhitzt. Erst ab dieser Temperatur ist es möglich, den Rohling durch eine Matrize zu pressen und eine Formgebung zu veranlassen. Dieses Verfahren birgt jedoch erheblich Nachteile, da ein Rohling zuvörderst auf ein energieintensives Temperaturniveau gebracht und dort während des gesamten Umformungsprozesses zuverlässig gehalten werden müßte. Bei einem ungleichmäßigen Abkühlungsprozess würde nämlich thermischer Verzug entstehen, der ein nachträgliches Richten, gegebenenfalls unter erneuter Erhitzung des fertig gestellten Spiralbohrers erforderlich machen würde. Dieses bekannte Verfahren birgt weiterhin den Nachteil, dass die fertig gestellten Spiralbohrer durch die Erwärmung auf über 900°C einer Verzunderung unterliegen, die nach der Herstellung entfernt werden müßte. Sowohl die thermische als auch mechanische Nachbearbeitung machen jedoch einen weiteren zusätzlichen Verfahrenschritt der Qualitätskontrolle notwendig.

Der Erfindung liegt die Aufgabe zugrunde, ein alternatives Verfahren zur Herstellung länglicher Bauteile aus Metall mit wendelförmigen Nuten, insbesondere Spiralbohrer oder Schnecken, zu schaffen. Dieses soll für eine Massenfertigung geeignet sein und sich durch eine verbesserte Wirtschaftlichkeit auszeichnen. Ferner soll eine zur Durchführung des Verfahrens geeignete Vorrichtung geschaffen werden.

Erfindungsgemäß wird die Aufgabe durch die im Anspruch 1 angegebenen Merkmale gelöst.

Vorteilhafte Weiterbildungen der Verfahrensweise sind Gegenstand der Ansprüche 2 bis 8. Die zur Durchführung des Verfahrens vorgesehene Vorrichtung ist Gegenstand des Anspruchs 9. Vorteilhafte Ausgestaltungen der Vorrichtung sind in den Ansprüchen 10 bis 15 angegeben.

Gemäß der erfindungsgemäßen Verfahrensweise ist mindestens eine Kaltumformstufe vorgesehen, in der der Rohling ohne vorherige Erwärmung in eine Führungsmatrize eingeführt und nachfolgend in einem Backenwerkzeug mit mindestens zwei beweglichen Backen, deren Innenwandung mindestens einen Abschnitt mit einer als Negativ ausgebildeten Kontur zur Bildung wendelförmiger Nuten aufweist, kalt umgeformt wird.

Der Kaltumformvorgang wird durch einen in axialer Richtung bewegbaren Presstempel, der am freien Ende des in der Führungsmatrize befindlichen Rohlings angreift, ausgelöst.

Aufgrund der anliegenden Presskraft wird der Rohling ohne vorherige Erwärmung mindestens teilweise durch die zentrale Öffnung des geschlossenen Backenwerkzeuges gepresst. Dabei werden während des Kontaktes mit der Werkzeugkontur durch plastische Kaltverformung wendelförmige Nuten auf der Mantelfläche des Rohlings erzeugt. Nach Beendigung des Kaltpressvorganges wird das Backenwerkzeug geöffnet und der z.B. zu einem Bohrer oder einer Schnecke umgeformte Rohling aus diesem entfernt.

Die mindestens eine Kaltumformstufe, in der die wendelförmigen Nuten für die Bohrmehlabfuhr auf dem Rohling erzeugt werden, wird innerhalb einer Mehrstufenpresse durchgeführt. Dabei kann als Ausgangsmaterial für den Rohling ein abgelängter Metalldraht eingesetzt werden, der in einer oder mehreren Fließpressoder Stauchstufen zu einem Rohling umgeformt wird. Innerhalb der Mehrstufenpresse wird die Schließkraft für die Backen mindestens eines der Umformwerkzeuge oder die Kraft für die Bewegung des Presstempels über den verfahrbaren Schlitten der Presse aufgebracht.

Auch die vorgenannten, vorgelagerten Kaltumformstufen zur Vorformung des Rohlings können innerhalb einer Mehrstufenpresse durchgeführt werden. Der vorgefertigte Rohling wird dann mittels eines Greifers aus der Führungsmatrize entfernt und zur Führungsmatrize der nächsten Bearbeitungsstation transportiert und in diese eingesetzt. Innerhalb einer Mehrstufenpresse besteht jede der drei Umformeinheiten I, II, II aus einer Führungsmatrize und dem zugehörigen Werkzeug. Durch die Herstellung in einer Mehrstufenpresse wird eine hohe Verfahrensökonomie erreicht, da insbesondere keine Erwärmung des Rohlings auf ein bestimmtes Temperaturniveau erforderlich ist.

Vorteilhafterweise können vorgelagerte Kaltumformstufen vorgesehen sein, in denen Schaft und/oder Kopf des Rohlings vorgeformt werden. Beispielsweise kann der Kopf des Rohlings abgeflacht oder in seinem Durchmesser reduziert werden, um nach Fertigstellung des Bohrers an diesen Abschnitt noch eine Schneidplatte anzubringen. In der Praxis gibt es unterschiedlicher Einspannmöglichkeiten, insbesondere für Bohrer, die unterschiedliche Schaftformen erfordern.

Während der Kaltverformung des Rohlings innerhalb einer oder mehrerer Umformstufen wird der Rohling zumindest teilweise, mit seinem Schaft, in der dem jeweiligen Werkzeug zugeordneten Führungsmatrize geführt. Vorzugsweise kann die Umformkraft innerhalb der vorgelagerten Umformstufen durch die axiale Bewegung des Pressstempels erzeugt werden.

Außer Kopf und/oder Schaft des Rohlings kann auch der dazwischen liegende Abschnitt des Rohlings in einer vorgelagerten Umformstufe kaltverformt werden. Beispielsweise wird dieser abgeflacht (Umformung von einer runden Querschnittsform in eine langlochartige oder elliptische Querschnittsform).

Es besteht auch die Möglichkeit, in einer Kaltumformstufe den Kopf des Rohlings zu einem Abschnitt mit stark reduzierter Steigung oder ohne Steigung bzw. Wendel umzuformen und gleichzeitig wendelförmige Nuten in dem Abschnitt zwischen Schaft und Kopf zu erzeugen.

In einer der vorgelagerten Kaltumformstufen kann z.B. das untere Teilstück des Rohlings zu einem abgeflachten bzw. flachgedrückten Abschnitt verformt werden. Auf dem benachbarten Abschnitt wird dann nur eine Wendel bzw. Spirale gebildet, die so ausgeführt ist, dass in der nachfolgenden Kaltumformstufe das Werkzeug problemlos geschlossen werden kann.

Hierzu ist es erforderlich, die zentrale Austrittsöffnung des Backenwerkzeuges mittels eines Gegenstückes zu verschließen, da die Umformung dieses Abschnittes überwiegend durch Stauchen erfolgt. Während des nachfolgenden Pressens der wendelförmigen Nuten wird nur der Abschnitt mit der Nut bzw. Spirale vom Werkzeug umschlossen. Der abgeflachte Abschnitt befindet sich außerhalb des Werkzeuges.

Die Backenwerkzeuge sind vorzugsweise so ausgeführt, dass an der Mantelfläche der Backen mindestens ein axial verschiebbares keil- oder kegelförmiges Element angreift, über das die Schließ- und Öffnungsbewegung der Backen erfolgt.

Hinsichtlich der konstruktiven Auslegung der Backenwerkzeuge kann auch auf bereits bekannte Ausführungen zurückgegriffen werden. Die Bewegung der Backen kann auch radial über eine gesonderte Antriebsvorrichtung erfolgen.

Zur erfindungsgemäßen Herstellung von länglichen Bauteilen mit wendelförmigen Nuten können grundsätzlich alle Metalle oder Metalllegierungen eingesetzt werden, die auch zum Fließpressen und Kaltverformen geeignet sind. In bestimmten Anwendungsfällen kann es aber auch erforderlich sein, den Rohling vor dem Pressen der wendelförmigen Nuten zu erwärmen, wobei jedoch keine Wärmebehandlung mit Gefügeänderung erfolgen darf.

Im Vergleich zu den bisher bekannten Verfahren zur Herstellung von Bohrern oder Schnecken zeichnet sich das erfindungsgemäße Verfahren zur Kaltumformung durch eine hohe Wirtschaftlichkeit aus, da nahezu alle Arbeitsvorgänge, insbesondere die Formgebung für Schaft, Kopf und Wendel innerhalb einer Mehrstufenpresse durchgeführt werden können und kein aufwendiges Temperaturmanagement erforderlich ist. Ein weiterer wesentlicher Vorteil der vorliegende Erfindung liegt darin, dass die mittels erfindungsgemäßen Verfahren hergestellten Bohrer oder Schnecken aufgrund Kaltumformung keiner Nachbearbeitung bedürfen. Gesteinsbohrer lassen sich somit ohne weitere Nachbearbeitung herstellen. Ein weiterer Vorteil liegt in der besonderen Härte der kaltverformten Bohrer und Schnecken, da durch die Kaltverformung und Kaltverfestigung keine Gefügeänderung erfolgt und die Längsausrichtung der kristallinen Gitteranordnung aufrechterhalten bleibt.

Ein weiterer Vorteil der vorliegenden Erfindung, insbesondere gegenüber bekannten Warmumformverfahren, liegt in der Toleranz- und Maßtreue und Oberflächengüte des Kaltumformverfahrens.

Eine zur Durchführung des erfindungsgemäßen Verfahrens geeignete Vorrichtung umfasst mindestens eine Kaltumformeinheit, die aus einer Führungsmatrize mit einer zentralen Öffnung zur Aufnahme eines Rohlings, einem Backenwerkzeug mit mindestens zwei beweglichen Backen, die in eine Öffnungs- und Schließstellung bewegbar sind, und aus einem axial bewegbaren Pressstempel, der in die zentrale Öffnung der Führungsmatrize einführbar ist, besteht.

In ihrer Schließstellung sind die Backen des Backenwerkzeuges durch eine in ihrer Größe veränderbare Zuhaltekraft fixiert. An der Innenwandung der Backen ist mindestens ein Abschnitt mit einer als Negativ ausgebildeten Kontur zur Ausformung wendelförmiger Nuten angeordnet.

Die mindestens eine Kaltumformeinheit, die aus Führungsmatrize, Backenwerkzeug und Pressstempel besteht und zur Ausformung der wendelförmigen Nuten vorgesehen ist, ist innerhalb einer Mehrstufenpresse mit einer feststehenden Werkzeugträgereinheit und einem in Richtung zur Werkzeugträgereinheit verfahrbaren Schlitten angeordnet. In der Mehrstufenpresse sollte mindestens noch ein zusätzliches Fließpress- oder Stauchwerkzeug integriert sein.

Der an der Innenwandung der Backen angeordnete Abschnitt mit einer als Negativ ausgebildeten Kontur zur Ausformung wendelförmiger Nuten kann in seiner Länge nur kurz, z.B. einer halben Steigung, oder der Länge des kaltumzuformenden Abschnittes entsprechen.

Da für bestimmte Anwendungsfälle Bohrer mit einer Schneidplatte ausgerüstet werden, besitzt z.B. das untere Ende des Backenwerkzeuges einen Abschnitt mit stark reduzierter Steigung oder ohne Steigung, zur Ausbildung eines abgeflachten Kopfes, an dem eine Schneidplatte befestigbar ist.

Die erfindungsgemäße Vorrichtung kann noch weitere Kaltumformeinheiten umfassen, die zur Vorformung des Rohlings bestimmt sind.

Vorzugsweise umfasst eine der vorgelagerten Kaltumformeinheiten ein mehrteiliges Backenwerkzeug mit einer Innenkontur zur Ausformung eines flachen Abschnittes am Kopf des Rohlings. Die Austrittsöffnung des Backenwerkzeuges ist hierzu mittels eines Gegenstempels verschließbar.

Eine andere der vorgelagerten Kaltumformeinheiten umfasst ein mehrteiliges Werkzeug, das eine Innenkontur zur Veränderung der Querschnittsform des kaltumzuformenden Abschnittes des Rohlings aufweist. Dieser kann z.B. vor der eigentlichen Ausbildung der wendelförmigen Nuten flachgedrückt werden.

Die Führungsmatrize kann einteilig oder in Längsrichtung zweigeteilt ausgeführt sein, wobei die beiden Teilstücke in eine Öffnungs- und Schließstellung bewegbar sind.

Das Backenwerkzeug besteht vorzugsweise aus einem ein- oder mehrteiligen äußeren Ring, in dem die Backen radial verschiebbar gelagert sind. Die Mantelflächen der Backen und die Innenfläche des Ringes sind kegelförmig ausgebildet, derart, dass bei axialer Verschiebung des Ringes oder der Backen diese in die Schließ- und Öffnungsstellung bewegbar sind.

Die Backenwerkzeuge können auch mit einer gesonderten Antriebseinheit zur radialen Bewegung der Backen in die Schließ- und Öffnungsstellung ausgerüstet sein. Das Backenwerkzeug kann entweder auf der Werkzeugträgereinheit oder dem Schlitten der Mehrstufenpresse montiert sein. Am Schlitten oder an der Werkzeugträgereinheit ist dann ein Betätigungselement angeordnet ist, über die radiale Verschiebung der Backen erfolgt.

In der Mehrstufenpresse können außerdem noch eine Abschervorrichtung und weitere Press- oder Stauchwerkzeuge angeordnet sein.

Einige bevorzugte Ausführungsvarianten der vorliegenden Erfindung werden nachfolgend näher erläutert. Es zeigen:
- Fig. 1: die einzelnen Verfahrensschritte A, B und C zur Herstellung eines erfindungsgemäßen Spiralbohrers in chronologischer Reihenfolge, in vereinfachter Darstellung,
- Fig. 2: eine vergrößerte Schnittdarstellung gemäß der Linie A-A der als Verfahrensschritt B gezeigten Ausführung,
- Fig. 3: eine zweite Ausführungsvariante zur Herstellung eines erfindungsgemäßen Spiralbohrers, als Längsschnitt,
- Fig. 4: die einzelnen Verfahrensschritte A, B und C einer dritten Ausführungsvariante zur Herstellung eines Spiralbohrers, in vereinfachter Darstellung, als Längsschnitt,
- Fig. 5: die einzelnen Verfahrensschritte A bis G einer vierten Ausführungsvariante zur Herstellung eines Spiralbohrers, in vereinfachter Darstellung, als Längsschnitt,
- Fig. 6: die einzelnen Verfahrensschritte A bis E einer fünften Ausführungsvariante zur Herstellung eines Spiralbohrers, in vereinfachter Darstellung, als Längsschnitt,
- Fig. 7: die einzelnen Verfahrensschritte A bis D einer dritten Ausführungsvariante zur Herstellung eines Spiralbohrers, in vereinfachter Darstellung, als Längsschnitt, und
- Fig. 8: den vorgeformten Rohling gemäß des Verfahrensschrittes B in Fig. 7
- Fig. 9: eine alternative Ausführungsvarianten zur Herstellung eines erfindungsgemäßen Spiralbohrers.

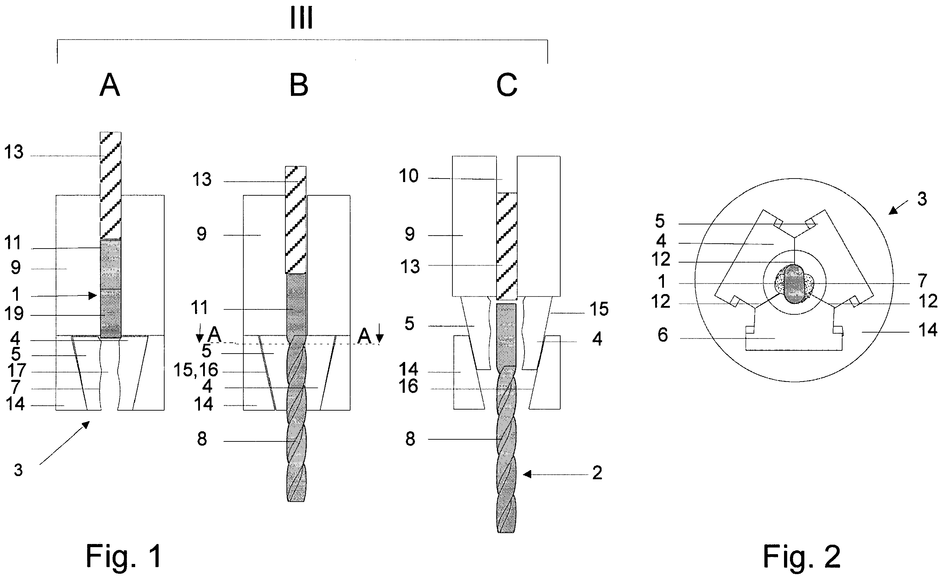

In der Fig. 1 sind vereinfacht die drei Verfahrensschritte A, B und C zur Herstellung eines erfindungsgemäßen Spiralbohrers 2 mit einem dreiteiligen Backenwerkzeug 3 gezeigt, ausgehend von einem Rohling 1. Die drei Verfahrensschritte A, B und C sind Bestandteil der Kaltumformstufe III zur Erzeugung der wendelförmigen Nuten 8 des Bohrers 2. Der Rohling 1 besteht aus einem den Schaft 11 bildenden Abschnitt und dem als wendelförmige Nuten umzuformenden Abschnitt 19. Der Rohling 1 kann beispielsweise als zylindrischer Stab ausgebildet sein.

Zur Herstellung des Bohrers erfolgt die Herstellung innerhalb einer Mehrstufenpresse, in der auch der Rohling 1, ausgehend von einem abgelängten Drahtabschnitt vorgeformt wird.

Die nicht näher dargestellte Mehrstufenpresse besitzt in an sich bekannter Bauart ein Maschinengestell mit einem verschiebbaren Schlitten, die jeweils mit Werkzeugträgereinheiten ausgerüstet sind. Außerdem sind ein Abscherwerkzeug sowie mindesten ein Fließpress- oder Stauchwerkzeug und ein Backenwerkzeug 3 angeordnet.

Zum Pressen werden durch die Bewegung des Schlittens die Werkzeughälften bzw. Backen in die Öffnungs- oder Schließstellung bewegt und gleichzeitig die Relativbewegung zwischen Werkzeug 3 und Pressstempel 13 ausgelöst.

Der als Ausgangsmaterial zugeführte Draht wird mittels eines nicht näher gezeigten Schermessers auf eine vorgegebene Länge abgelängt und der abgelängte Drahtabschnitt, mittels einer nicht näher gezeigten Greifer- oder Transportvorrichtung vor die zentrale Öffnung 10 der Führungsmatrize 9 positioniert und mittels des Pressstempels 13 in diese eingeschoben. Die zentrale Öffnung 10 ist nur in der Darstellung des Verfahrensschrittes C zu sehen. Gegebenenfalls kann es erforderlich sein, dass der Drahtabschnitt vor der Einführung in die Führungsmatrize 9 noch kalibriert oder vorgeformt wird.

Unmittelbar nach der Führungsmatrize 9 ist das Backenwerkzeug 3 angeordnet. Dieses besteht aus drei in radialer und axialer Richtung bewegbaren Backen 4, 5 und 6. (Fig. 2). An der Innenwandung der Backen 4, 5 und 6 ist ein Abschnitt mit einer als Negativ ausgebildeten Kontur 7 zur Ausformung wendelförmiger Nuten 8 angeordnet. Der konturbildende Abschnitt 7 erstreckt sich in axialer Richtung nur über einen Teil der Länge der zu formenden Bohrwendel. In bestimmten Anwendungsfällen kann es auch zweckmäßig sein, dass der konturbildende Abschnitt 7 länger ausgeführt ist.

Die Länge des konturbildenden Abschnittes 7 ergibt sich in Abhängigkeit von der Steigung der Wendel, wobei, je nach Profil nur ein Teil einer 360° Wendel erforderlich ist. Da das gezeigte Beispiel zur Herstellung eines einfachen Spiralbohrers 2 mit konstantem Außendurchmesser vorgesehen ist, ist eine einteilige Ausführung der Matrize 9 vollkommen ausreichend. Die zentrale Bohrung bzw. Öffnung 10 der Matrize 9 ist in ihrem Durchmesser nur geringfügig größer als der Außendurchmesser des Rohlings 1 (Toleranz im Hundertstelbereich). Die Führungsmatrize 9 ist erforderlich, um ein mögliches Abknicken des Rohlings 1 während des Press- bzw. Umformvorganges zu verhindern.

Wie in Fig. 1, Verfahrensschritt A, gezeigt, wird das Backenwerkzeug 3 vor dem Beginn des Kaltumformvorganges geschlossen, die Backen 4, 5 und 6 stehen an ihren Trennflächen 12 miteinander in Berührungskontakt.

Der vorgefertigte vorzugsweise zylinderförmige Rohling 1 wird mittels des Pressstempels 13 in die zentrale Öffnung 10 der Matrize 9 eingeschoben, bis zum Berührungskontakt mit der hervorstehenden Werkzeuginnenkontur 7. Der Presstempel 13 wird anschließend in axialer Richtung mit der erforderlichen Presskraft beaufschlagt, die ausreichend groß ist, um den Rohling 1 entlang der Werkzeuginnenkontur 7 durch die zentrale Öffnung bzw. den Hohlraum 17 des Backenwerkzeuges 3 zu drücken bzw. zu pressen, wobei sich der Rohling 1 plastisch kaltverformt unter Ausbildung wendelförmiger Nuten 8 auf seiner Mantelfläche (Verfahrensschritt B). Gleichzeitig wird auf die Backen 4, 5 und 6 eine ausreichend große Zuhaltekraft ausgeübt, um zu verhindern, dass sich die Backen 4, 5, 6 des Backenwerkzeuges 3 aufgrund des anliegenden hohen Pressdruckes öffnen oder auseinandergedrückt werden. Während des Pressvorganges wird der Rohling aufgrund seiner plastischen Kaltverformung in Längsrichtung gestreckt bzw. gedehnt.

Mit Ausformung der wendelförmigen Nuten 8 wird der Abschnitt 19, auf dem die Nuten 8 ausgebildet werden, selbständig langsam um seine Längsachse gedreht. Die wendelförmigen Nuten 8 werden nur entlang eines vorgegebenen Abschnittes 19 des Rohlings gebildet. Ist dieser erreicht, wie im Verfahrensschritt B zu sehen, so werden Presskraft des Stempels 13 und die Zuhaltekraft der Backen 4, 5, 6 gegen Null gefahren und diese geöffnet, wie im Verfahrensschritt C gezeigt.

Zum Auswerfen des fertigen Spiralbohrers 2 wird der Presstempel 13 weiter in Pressrichtung bewegt. In Abhängigkeit vom Werkzeugkonzept kann der Bohrer 2 auch anderweitig entformt werden, z.B. mittels eines gesonderten Auswerfers, der in entgegengesetzter Richtung bewegt wird.

Sowohl die erforderliche Presskraft als auch die Zuhaltekraft können über die in der Mehrstufenpresse vorhandenen Aggregate oder Federpakete erzeugt werden. Das Backenwerkzeug 3 besteht im gezeigten Beispiel aus einem äußeren, in axialer Richtung verschiebbaren Ring 14, in dem die drei Backen 4, 5, 6 radial beweglich gelagert sind. Der Ring 14 ist auf einer kegelförmigen Mantelfläche 15 der Backen 4, 5, 6 geführt, die sich in Richtung der Öffnungsbewegung, wie im Verfahrensschritt C zu sehen, verjüngt. Der Ring 14 besitzt eine mit dieser korrespondierende kegelförmige Innenfläche 16.

Zur Öffnung des Backenwerkzeuges 3 wird der Ring 14 in Pressrichtung bewegt. Bei Anordnung innerhalb einer Mehrstufenpresse wird die Bewegung des Ringes 14 über ein nicht näher gezeigtes Angriffselement durch die Zustellbewegung des Schlittens der Mehrstufenpresse ausgelöst, zum Öffnen und Schließen der Backen 4, 5 und 6. Die Öffnungs- und Schließbewegung der Backen 4, 5 und 6 kann auch in anderer Art und Weise erfolgen.

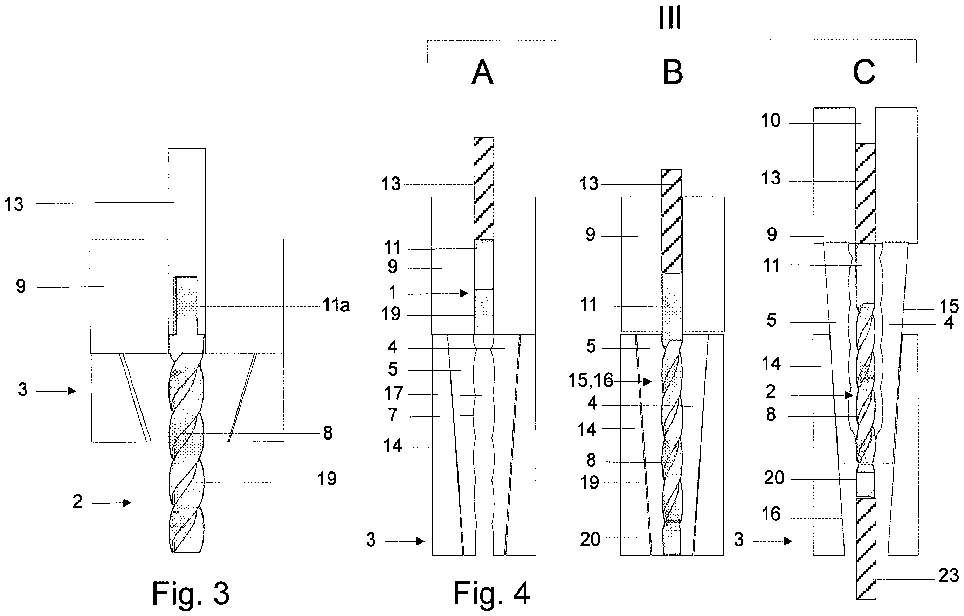

In den Figuren 3 bis 7 sind verschiedene Ausführungsvarianten an Bohrern gezeigt, die sich nach der erfindungemäßen Verfahrensweise herstellen lassen.

In Fig. 3 ist ein Spiralbohrer 2 gezeigt, der sich von dem in den Figuren 1 und 2 dargestelltem Bohrer lediglich dadurch unterscheidet, dass der obere Abschnitt 11a des Schaftes im Durchmesser kleiner ist als der Außendurchmesser des wendelförmigen Abschnittes 19.

Der im Durchmesser kleinere Schaft 11 a wurde in einer vorgelagerten Pressstufe bereits am Rohling 1 erzeugt. Die Ausbildung des wendelförmige Abschnittes 19 erfolgt in analoger Weise gemäß den Verfahrensschritten A bis C in Fig. 1.

Die Figuren 4 bis 6 zeigen Spiralbohrer 2 mit einem abgeflachten Abschnitt 20 am Kopfende, das nutenfrei ausgebildet ist. An diesem Abschnitt 20 werden nachträglich Schneidplatten als Hartmetalleinsatz befestigt. Wie nachfolgend erläutert, kann die Herstellung dieser Bohrer unterschiedlich erfolgen.

In der Fig. 4 sind die Verfahrensstufen A "Beladen des Werkzeuges", B "Kaltumformen des Rohlings" und C "Auswerfen/Entladen des hergestellten Bohrers" zur Herstellung eines Spiralbohrers 2 gezeigt, dessen Spitze bzw. Kopf 20 abgeflacht ist. Der Schaft 11 und der wendelförmige Abschnittes 19 haben ähnliche Außendurchmesser. Im Unterschied zu den vorhergehenden Figuren sind die Backen 4, 5, 6 des Backenwerkzeuges 3 und deren Innenkontur 7 anders ausgeführt. Die Backen besitzen die gleiche Länge wie der wendelförmige Abschnitt 19 einschließlich Spitze 20.

Der untere Abschnitt der Backen ist in seiner Innenkontur so ausgelegt, dass eine abgeflachte Spitze 20 gebildet wird. Oberhalb dieses Abschnittes sind die Backen 4, 5, 6 über ihre gesamte Länge mit einer wendelförmigen Innenkontur 7 ausgebildet.

Nach dem Schließen des Backenwerkzeuges 3 wird der Rohling 1 mittels des Pressstempels 13 in den Hohlraum des Backenwerkzeuges 3 gedrückt (Verfahrensschritt B), wobei durch plastische Verformung die abgeflachte Spitze 20 und der wendelförmige Abschnitt 19 gebildet werden (Verfahrensschritt B). Anschließend wird das Backenwerkzeug 3 geöffnet und der Bohrer 2 mittels eines separaten Auswerfers 23 in entgegengesetzter Richtung zur Pressrichtung ausgeworfen (Verfahrensschritt C). Die Verfahrensschritte A bis C sind Bestandteil der Kaltumformstufe III.

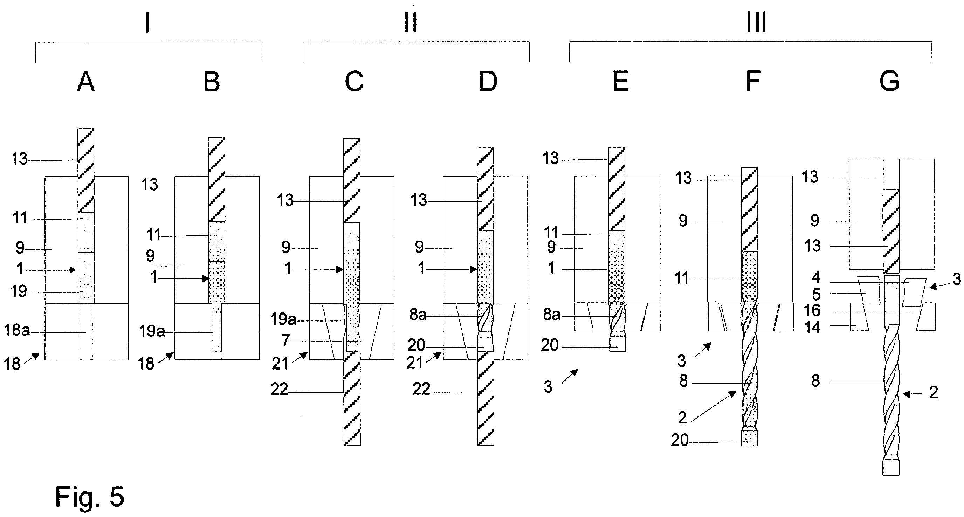

Gemäß den in Fig. 5 gezeigten Verfahrensschritten A bis G wird der vorzugsweise zylindrische Rohling 1 zuerst in einem gesonderten zweiteiligen Werkzeug 18 (erstes Werkzeug) kaltumgeformt, derart, dass das untere Teilstück 19a des kaltumzuformende Abschnitt 19 einen kleineren Durchmesser aufweist als das andere Teilstück dieses Abschnittes 19. Der in die Führungsmatrize 9 eingeschobene Rohling 1 (Verfahrensschritt A) wird mittels des Pressstempels 13 in den im Durchmesser kleineren zylindrischen Hohlraum 18a des Werkzeuges 18 gedrückt (Verfahrensschritt B). Die Verfahrensschritte A und B bilden eine vorgelagerte Kaltumformstufe I.

Der Außendurchmesser des kaltumgeformten Abschnittes 19a ist so bemessen, dass die Backen 4, 5, 6 des nachfolgend zugestellten Backenwerkzeuges 21 (zweites Werkzeug) problemlos geschlossen werden können, ohne mit der Mantelfläche des Abschnittes 19a in Berührungskontakt zu gelangen. Nach Beendigung der Kaltumformstufe I wird die nachfolgende Kaltumformstufe II (Verfahrensschritte C und D) auf der nächsten Station der Mehrstufenpresse durchgeführt. Hier kommt ein Bakkenwerkzeug 21 zum Einsatz, dessen Werkzeuginnenkontur 7 so gestaltet ist, dass ein wendelförmiger Nut- bzw. Spiralabschnitt 8a und ein flachgedrückter (wendelloser) Abschnitt 20 entstehen (Verfahrensschritt D). Die zentrale Öffnung des Backenwerkzeuges 21 ist von unten durch einen Gegenstempel 22 geschlossen. Gemäß dem nächsten Verfahrensschritt D drückt der Pressstempel 13 mit der erforderliche Presskraft auf den Rohling 1. Dadurch wird das untere Teilstück 19a des Rohlings 1 so verformt, dass ein kurzer wendelförmiger Nut- bzw. Spiralabschnitt 8a und ein flachgedrückter Abschnitt 20 gebildet werden. Während der Verformung wird der Rohling aufgestaucht, bis der Werkzeughohlraum vollständig gefüllt ist. Durch den Gegenstempel 22 wird ein Durchdrücken des Rohlings 1 verhindert.

Nach dem Öffnen des zweiten Backenwerkzeuges 21 wird der vorgeformte Rohling aus der Führungsmatrize 9 mittels eines Greifers entnommen, zur nächsten Station, der Kaltumformstufe III, transportiert und in die zu dieser Station gehörende Führungsmatrize 9 eingeschoben.

In dieser Kaltumformstufe III erfolgt die Ausbildung der wendelförmigen Nuten 8 (Verfahrensschritte E bis G).

Das in der Kaltumformstufe III zum Einsatz kommende dritte Backenwerkzeug 3 entspricht in seinem Aufbau dem in Fig. 1 gezeigten Backenwerkzeug 3. Die Backen des dritten Backenwerkzeuges 3 sind in ihrer Länge bzw. Höhe so bemessen, dass diese im geschlossenen Zustand nur den wendelförmigen Nutabschnitt 8a umschließen (Verfahrensschritt E). Der Kopf 20 des Rohlings 1 ragt aus dem Werkzeug 3 heraus. Die Backen besitzen eine wendelförmige Innenkontur 7 analog wie das in Fig. 1 gezeigte Backenwerkzeug 3.

Gemäß dem Verfahrensschritt F wird nunmehr der Rohling 1 mittels des Pressstempels 13 durch die Werkzeugöffnung gepresst und dabei auf dem noch verbleibenden Teilstück des Abschnittes 19 wendelförmige Nuten 8 erzeugt. Nach Beendigung des Pressvorganges wird das Backenwerkzeug 3 geöffnet und der Spiralbohrer 2 durch weitere Bewegung des Pressstempels 13 in Pressrichtung ausgeworfen (Verfahrensschritt G).

Die Durchführung der einzelnen Kaltumformstufen I, II und III erfolgt jeweils in einer separaten Kaltumformeinheit, die aus einer Führungsmatrize 9 und dem jeweiligen Werkzeug 18, 21, 3 besteht.

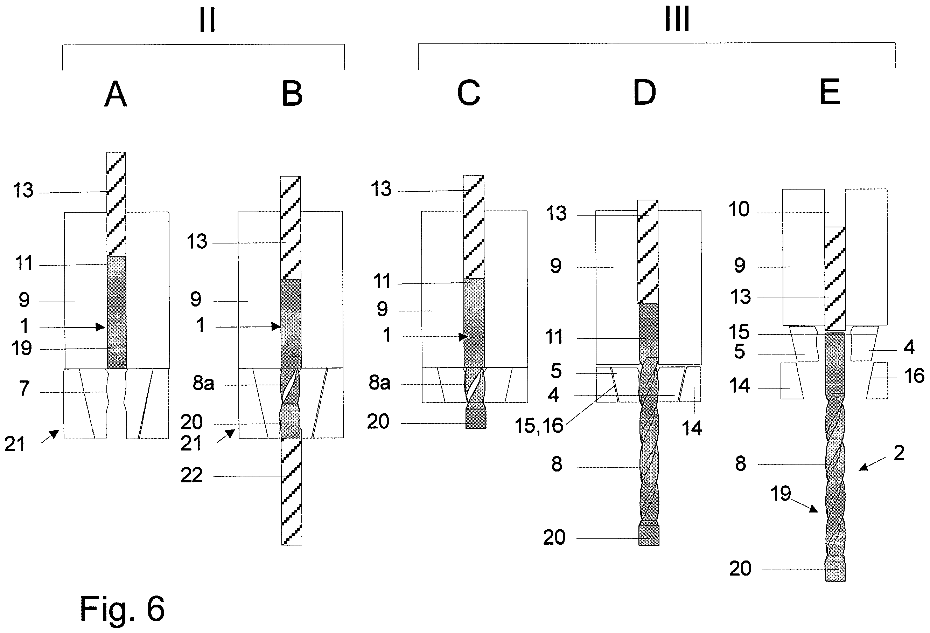

Gemäß einer weiteren Verfahrensweise (Fig. 6) wird als Rohling 1 ein zylindrischer Metallstab eingesetzt. Dieser wird mittels des Pressstempels 13 in ein Backenwerkzeug 21 gedrückt, das analog wie das Backenwerkzeug 21 mit Gegenstempel 22 gemäß Fig. 5 ausgebildet ist. Die Verfahrensschritte A und B bilden die Kaltumformstufe II und die Verfahrensschritte C bis E die Kaltumformstufe III. Die Verfahrensschritte B bis E entsprechen den in Fig. 5 gezeigten Verfahrensschritten D bis G. Der Kopf des hergestellten Spiralbohrers 2 besitzt ebenfalls einen abgeflachten Abschnitt 20.

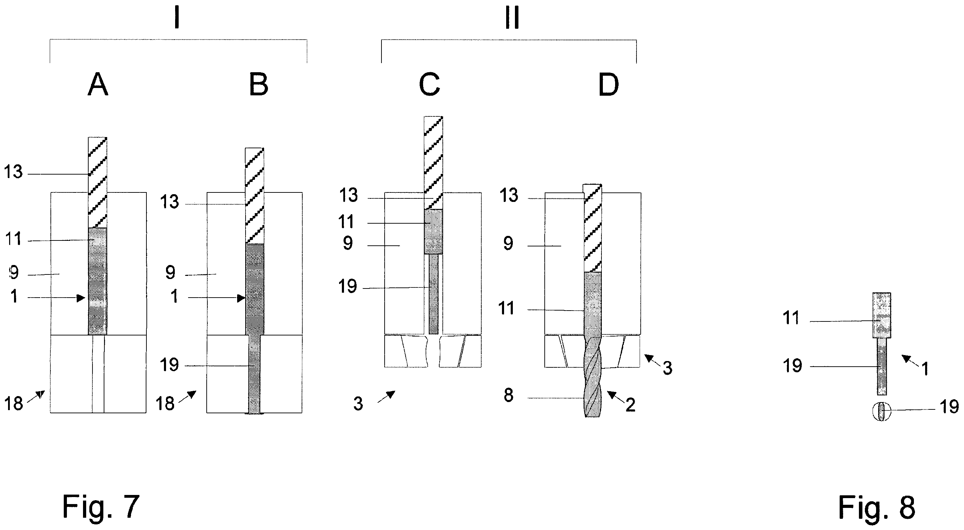

Die Backenwerkzeuge 21 und 3 sind analog ausgelegt wie die in Fig. 5. Nach der in Fig. 7 gezeigten Verfahrensweise wird in einer vorgelagerten Pressstufe (Kaltumformstufe I) mittels eines Werkzeuges 18 der zylindrische Rohling 1 derart verformt, dass der mit Bohrmehlnuten auszurüstende Abschnitt 19 flachgedrückt ist, also eine langlochartige Querschnittsform besitzt, wie in Fig. 8 gezeigt. Gemäß Verfahrensschritt B wird der vorzugsweise zylindrische Rohling mittels des Stempels 13 durch Fließpressen in die gewünschte Form, wie in Fig. 8 gezeigt, gebracht. Nach dem Öffnen des Werkzeuges 18 wird der vorgeformte Rohling 1 aus der Führungsmatrize 9 der Kaltumformstufe I entnommen und der Führungsmatrize 9 der nachfolgenden Station (Kaltumformstufe III) zugeführt. In dieser wird gemäß dem Verfahrensschritt D der vorgeformte Rohling 1 mittels des Pressstempels 13 durch ein Bakkenwerkzeuges 3 gedrückt, das analog ausgeführt ist, wie das in Fig. 1 gezeigte Bakkenwerkzeug. Aufgrund der bereits erfolgten Querschnittsverringerung des kaltumzuformenden Abschnittes 19 sind geringere Umformkräfte erforderlich, um die Bohrmehlnuten auszubilden. Der hergestellte Spiralbohrer 2 besitzt einen konstanten Außendurchmesser, vom Schaft bis zum Kopf. Die Entformung des Bohrers 2 erfolgt dann analog wie vorstehend bereits erläutert.

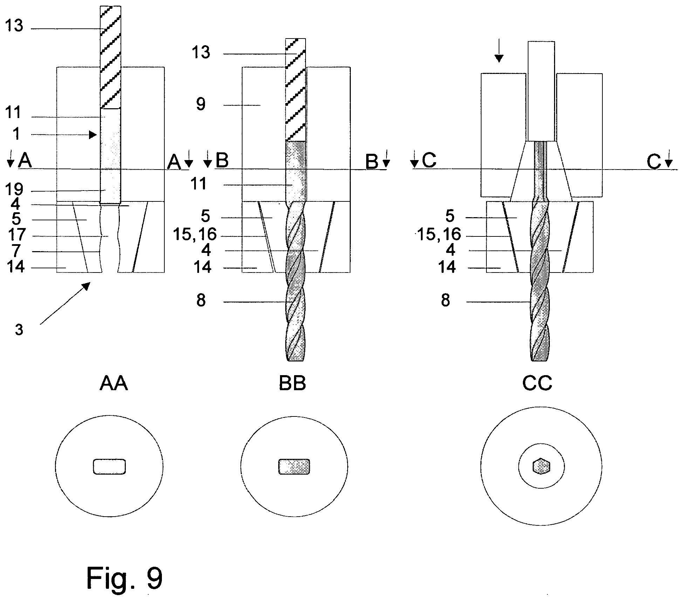

Gemäß einer weiteren Ausführungsform der vorliegenden Erfindung wird die Querschnittsform im Bereich 19, wie in Figur 9 gezeigt, vorprofiliert. Eine derartige Vorprofilierung weist einen polygonen Querschnitt auf, insbesondere kann dieser beispielsweise ein Dreieck, Quadrat (siehe Schnitt AA und BB), Hexagon (siehe Schnitt CC) oder Oktogon (nicht dargestellt) sein. Ebenso können polygone Querschnitte in Sternform vorteilhaft sein. Durch dieses Vorprofil im Bereich 19 wird unter anderem der Vorteil erzielt, dass bei der Herstellung der Spirale die aufzuwendenden Kräfte geringer sein können als bei kreisrunden Querschnitten eines zylindrischen Rohlings. Die Vorprofilierung reduziert hierbei die Kräfte im Pressstempel 13 durch eine Volumenvorverteilung des Materials und somit auch die auf die Backen und Matrizen wirkenden Umfangskräfte. Bei der Wahl der Profilierung kann es vorteilhaft sein, die Anzahl der Polygone auf die Anzahl der Schneiden und Nuten abzustimmen. So ist es erfindungsgemäß sinnvoll, bei einem Spiralbohrer mit drei Schneiden einen dreieckigen Querschnitt als Rohling zu wählen.

Nach erfolgter Herstellung der Spirale in den Verfahrensschritten AA und BB wird im Verfahrensschritt CC der Bereich, der nicht zu einer Spirale umgeformt worden ist, mittels Kaltverformung umgeformt, bspw. in einen Abschnitt, der zur Bohreraufnahme in einem Bohrfutter geeignet ist.

Bei einer weiteren Verfahrensvariante der vorliegenden Erfindung wird der gesamte Rohling in einer Kaltumformvorstufe verformt und beispielsweise auf einen hexagonalen Querschnitt kaltverformt. Die hexagonale Vorverformung des gesamten Rohlings weist insbesondere den Vorteil auf, dass aufgrund der bereits erfolgten Volumenvorverteilung des hexagonalen Abschnitts, die Umfangskräfte im Bereich, der zur Spirale verformt wird, geringer sein können als bei zylindrischen Querschnitten. Der Bereich, der nicht zur Spirale kaltverformt wird, kann als Einspannbereich für die spätere Bohreraufnahme im Bohrfutter verwendet werden.

Diese Kaltverformung, wie in Figur 9, CC dargestellt, kann mittels Backen erfolgen. Ebenso ist es auch möglich, dass das stangen- oder drahtförmige Ausgangsmaterial bereits einen polygonen Querschnitt aufweist und die Rohlinge keine weitere Kaltverformung unterzogen werden.

### Bezugszeichen

- 1: Rohling
- 2: Spiralbohrer
- 3: Backenwerkzeug
- 4: Backe
- 5: Backe
- 6: Backe
- 7: Werkzeuginnenkontur
- 8: wendelförmige Nut
- 8a: Nutabschnitt
- 9: Führungsmatrize
- 10: zentrale Öffnung von 9
- 11: Schaft bzw. Aufnahme
- 11a: oberes Ende von 11
- 12: Trennfläche
- 13: Pressstempel
- 14: Ring
- 15: Mantelfläche
- 16: Innenfläche
- 17: zentrale Öffnung bzw. Hohlraum von 3
- 18: zweiteiliges Werkzeug (erstes)
- 18a: Hohlraum
- 19: kaltumzuformender Abschnitt von 1
- 19a: unteres Teilstück
- 20: abgeflachter Abschnitt am Kopf
- 21: Backenwerkzeug (zweites)
- 22: Gegenstempel
- 23: Auswerfer

## Patentansprüche

1. Verfahren zur Herstellung länglicher Bauteile aus Metall mit wendelförmigen Nuten, insbesondere Spiralbohrer oder Schnecken, wobei ausgehend von einem vorgefertigten Rohling (1) in diesen wendeiförmige Nuten (8) durch einen Umformvorgang erzeugt werden, wobei mindestens eine Umformstufe (III) vorgesehen ist in der der Rohling (1) in eine Führungsmatrize (9) eingeführt und nachfolgend in einem Backenwerkzeug (3) mit mindestens zwei beweglichen Backen (4, 5, 6), deren Innenwandung mindestens einen Abschnitt mit einer als Negativ ausgebildeten Kontur (7) zur Bildung wendelförmiger Nuten (8) aufweist, umgeformt wird, und durch einen in axialer Richtung bewegbaren Pressstempel (13), der am freien Ende des in der Führungsmatrize (9) befindlichen Rohlings (1) angreift, der Rohling (1) mindestens teilweise durch die zentrale Öffnung (17) des geschlossenen Backenwerkzeuges (3) gepresst wird und dabei während des Kontaktes mit der Werkzeugkontur (7) durch plastische Verformung wendelförmige Nuten (8) erzeugt werden, und nach Beendigung des Pressvorganges das Backenwerkzeug (3) geöffnet und der umgeformte Rohling (2) aus diesem entfernt wird, und die Schließkraft für die Backen (4, 5, 6) mindestens eines der Umformwerkzeuge (3, 18, 21) oder die Kraft für die Bewegung des Presstempels (13) über den verfahrbaren Schlitten der Mehrstufenpresse aufgebraucht wird,
**dadurch gekennzeichnet, dass**:
- die Umformstufe (III) in der die wendelförmigen Nuten (8) auf dem Rohling (1) erzeugt werden eine Kaltumformstufe (III) ist;
- mindestens diese Kaltumformstufe (III) innerhalb einer Mehrstufenpresse erfolgt,
wobei als Ausgangsmaterial für den Rohling (1) ein abgelängter Metalldraht eingesetzt wird, der in einer oder mehreren Fließpress- oder Stauchstufen zu einem Rohling (1) kaltumgeformt wird, wobei die Schließkraft für die Backen (4, 5, 6) mindestens eines der Kaltumformwerkzeuge (3, 18, 21) oder die Kraft für die Bewegung des Presstempels (13) über den verfahrbaren Schlitten der Mehrstufenpresse aufgebracht wird.

2. Verfahren nach Anspruch 1, **dadurch gekennzeichnet, dass** Schaft (11) und/oder Kopf (20) des Rohlings (1) innerhalb weiterer, vorgelagerter Kaltumformstufen (I, II) vorgeformt werden.

3. Verfahren nach einem der Ansprüche 1 oder 2, **dadurch gekennzeichnet, dass** während der Verformung des Rohlings (1) innerhalb vorgelagerter Kaltumformstufen (I, II) der Rohling (1) zumindest teilweise in einer anderen Führungsmatrize (9) geführt wird und die erforderliche Umformkraft durch axiale Bewegung des Presstempels (13) erzeugt wird.

4. Verfahren nach einem der Ansprüche 1 bis 3, **dadurch gekennzeichnet, dass** der Abschnitt (19) des Rohlings (1), auf dem die wendelförmigen Nuten (8) gebildet werden, in einer vorgelagerten Kaltumformstufe (I) verformt wird.

5. Verfahren nach einem der Ansprüche 1 bis 4, **dadurch gekennzeichnet, dass** der Abschnitt (19) des Rohlings (1), auf dem die wendelförmigen Nuten (8) gebildet werden von einer runden Querschnittsform in eine langlochartige oder elliptische Querschnittsform (20) verformt wird.

6. Verfahren nach einem der Ansprüche 1 bis 5, **dadurch gekennzeichnet, dass** in einer Kaltumformstufen (III) in einem Verfahrensschritt die wendelförmigen Nuten (8) gebildet werden und der Kopf (20) des Rohlings (1) in seinem Querschnitt reduziert wird.

7. Verfahren nach einem der Ansprüche 1 bis 6, **dadurch gekennzeichnet, dass** in einer der vorgelagerten Kaltumformstufen (II) das untere Teilstück des Rohlings (1) in seinem Querschnitt verformt wird, Insbesondere zu einem Abschnitt (20) ohne wendelförmige Nut oder Spirale, und auf dem benachbarten Abschnitt (19a) ein kurzes Stück einer Spirale oder Wendel (8a) gebildet wird, wobei während der Kaltumformung die zentrale Austrittsöffnung des Backenwerkzeuges (21) mittels eines Gegenstückes (22) verschlossen ist.

8. Verfahren nach einem der Ansprüche 1 bis 7, **dadurch gekennzeichnet, dass** der Rohling (1) einen Bereich aufweist, der keiner weiteren Kaltverformung unterzogen wird, oder der Rohling nach erfolgter Herstellung der Spirale einen Bereich aufweist, der einer Kaltverformung unterzogen wird, und der Bereich so ausgebildet ist, dass er als Einspannbereich für ein Bohrfutter oder Adapter geeignet ist.

9. Vorrichtung zur Durchführung des Verfahrens nach einem der Ansprüche 1 bis 8, welche mindestens eine Umformeinheit (III) umfasst, die aus einer Führungsmatrize (9) mit einer zentralen Öffnung (10) zur Aufnahme eines Rohlings (1), einem Backenwerkzeug (3) mit mindestens zwei beweglichen Backen (4, 5, 6), die in eine Öffnungs- und Schließstellung bewegbar sind, und aus einem axial bewegbaren Pressstempel (13), der in die zentrale Öffnung (10) der Führungsmatrize (9) einführbar ist, besteht, wobei in der Schließstellung die Backen (4, 5, 6) durch eine in ihrer Größe veränderbare Zuhaltekraft fixiert sind und an der Innenwandung der Backen (4, 5, 6) mindestens ein Abschnitt mit einer als Negativ ausgebildeten Kontur (7) zur Ausformung wendelförmiger Nuten (8) angeordnet ist, die Kaltumformeinheit (III) innerhalb einer Mehrstufenpresse mit einer feststehenden Werkzeugträgereinheit und einem in Richtung zur Werkzeugträgereinheit verfahrbaren Schlitten angeordnet ist,
**dadurch gekennzeichnet, dass**:
- die Vorrichtung eine Mehrstufenpresse mit einer feststehenden Werkzeugträgereinheit und einem in Richtung zur Werkzeugträgereinheit verfahrbaren Schlitten ist;
- die mindestens eine Umformeinheit (III) bestehend aus Führungsmatrize (9), Backenwerkzeug (3) und Pressstempel (13) eine Kaltumformeinheit (III) ist, welche innerhalb der Mehrstufenpresse angeordnet ist;
- in der Mehrstufenpresse mindestens noch ein zusätzliches Fließpress- oder Stauchwerkzeug angeordnet ist.

10. Vorrichtung nach Anspruch 9, **dadurch gekennzeichnet, dass** das untere Ende des Backenwerkzeuges (3) zur Formung des Kopfes (20) einen Abschnitt (20) mit verringerter Steigung aufweist.

11. Vorrichtung nach einem der Ansprüche 9 oder 10, dass eine der vorgelagerten Kaltumformeinheiten (I) ein mehrteiliges Werkzeug (18) umfasst, das eine Innenkontur zur Veränderung der Querschnittsform des kaltumzuformenden Abschnittes (19) des Rohlings (1) aufweist.

12. Vorrichtung nach einem der Ansprüche 9 bis 11, **dadurch gekennzeichnet, dass** das Backenwerkzeug (3) mit einer externen Antriebseinheit zur radialen Bewegung der Backen (4, 5, 6) in die Schließ- und Öffnungsstellung in Verbindung steht.

13. Vorrichtung nach einem der Ansprüche 9 bis 12, **dadurch gekennzeichnet, dass** das Backenwerkzeug (3) entweder auf der Werkzeugträgereinheit oder dem Schlitten einer Mehrstufenpresse montiert ist und am Schlitten oder an der Werkzeugträgereinheit ein Betätigungselement angeordnet ist, über das die Backen (4, 5, 6) radial verschiebbar sind.

14. Vorrichtung nach einem der Ansprüche 9 bis 13, **dadurch gekennzeichnet, dass** der Rohling (1) einen Bereich aufweist, der einer weiteren Kaltverformung unterzogen wird, und dieser Bereich so ausgebildet ist, dass er als Einspannbereich für ein Bohrfutter geeignet ist.

15. Vorrichtung nach einem der Ansprüche 9 bis 14, **dadurch gekennzeichnet, dass** der Bereich des Rohlings (1) einen polygonalen, insbesondere hexagonalen Querschnitt aufweist.

## Claims

1. Method for producing longitudinal components from a metal with helical notches particularly twist drills or screws, wherein starting from a pre-fabricated blank (1) in this helical notches (8) are generated by a deformation process wherein at least one deforming step (III) is intended in which the blank (1) is inserted into a guidance template and subsequently is deformed in a split mold (III) with at least two movable splits (4, 5, 6) which inner wall comprises at least one section with a contour (7) configured as a negative for the generation of helical notches (8) and
wherein in axial direction of a movable heading tool (13) which engages at the free edge of the blank (1) assembled in the guidance template (9) the blank (1) is compressed at least partially through the central opening (17) of the closed split mold (3) and thereby during the contact with the tool contour (7) helical notches (8) are generated by plastic deformation and after termination of the compression progress the split mold (3) is opened and the deformed blank (2) is removed from the split mold and the closing force for the splits (4, 5, 6) of at least one of the deformation tools (3, 18, 21) or the force for the movement of the heading tool (13) is applied via the displaceable slit of the multiple step press
**characterized in that**
- the deformation step (III) in which the helical notches (8) are generated on the blank (1) is a cold deformation step (III)
- at least this cold deformation step (III) occurs within the multiple step press wherein the starting material for the blank (1) as a starting material for the blank (1) is a cross cut metal wire which is cold deformed to a blank (1) in one or multiple extruding press or compression steps, wherein the closing force for the slits (4, 5, 6) of at least one of the cold deformation tools (3, 18, 21) or the force for the movement of the heading tool (13) is generated via the displaceable slit of the multiple step press.

2. Method according to claim 1
**characterized in that**
the shaft (11) and/or the head (20) of the blank (1) are preformed within further, previous cold deformation steps (I, II).

3. Method according to one of claims 1 or 2
**characterized in that**
during the deformation of the blank (1) within the previous cold deformation steps (I, II) the blank (1) is guided at least partially in another guidance template (9) and the necessary deformation force is generated by the axial movement of the heading tool (13).

4. Method according to one of claims 1 to 3
**characterized in that**
the section (19) of the blank (1) on which the helical notches (8) are established is deformed in a previous cold deformation step (I).

5. Method according to one of claims 1 to 4
**characterized in that**
the section (19) of the blank (1) on which the helical notches (8) are generated are deformed by a circular cross section form in longhole-like or elliptic cross section form (20).

6. Method according to one of the claims 1 to 5
**characterized in that**
in a cold deformation step (III) in one processing step the helical notches (8) are established and the head (20) of the blank (1) is reduced in its cross section.

7. Method according to one of the claims 1 to 6
**characterized in that**
in a previous cold deformation step (II) the lower segment of the blank (1) is deformed in its cross section particularly to a section (20) without helical notches or spirals and on the neighboring section (19a) a short piece of a spiral or coil (8a) is established wherein during the cold deformation the central outlet opening of the split mold (21) is closed by a counterpart (22).

8. Method according to one of the claims 1 to 7
**characterized in that**
the blank (1) comprises an area which is not subject to a further cold deformation or after the production of the spiral the blank (1) comprises an area which is subject to a cold deformation and the area is configured such that it is suitable as an fixation area for a drill chuck or adapter.

9. Device for performing the method according to one of the claims 1 to 8 which comprises at least one deformation unit (III)
which is consisted of a guidance template (9) with a central opening (10) for the acceptance of a blank (1), a split mold (3) with at least two splits (4, 5, 6) which are movable into an opening and closing position and of an axial movable heading tool (13) which is insertable into the central opening (10) of the guidance template (9) wherein in the closing position the slits (4, 5, 6) are fixed by a holding force alterable in its size and at the inner wall of the slits (4, 5, 6) at least one section with a contour (7) configured as a negative is arranged for the formation of helical notches (8), the cold deformation unit (III) is arranged within the multiple step press in a fixed tool carrier unit and in a displaceable slit in the direction to the tool carrier unit **characterized in that**
- the device is a multiple step press with a rigid tool carrier unit and a slit displaceable in the direction to the tool carrier unit
- the at least one deformation unit (III) comprising of the guidance template (9), split mold (3) and hidding tool (13) is a cold deformation (III) which is assembled within the multiple step press
- in the multiple step press at least one additional extruding press or compression tool is assembled.

10. Device according to claim 9
**characterized in that**
the lower edge of the split mold (3) comprises a section (20) with a reduced inclination for forming the head (20)

11. Device according to one of claims 9 or 10
**characterized in that**
a previous cold deformation unit (I) comprises a multipart tool (18) which comprises an inner contour for the alteration of the cross section form of the cold deforming section (19) of the blank (1).

12. Device according to one of claims 9 to 11
**characterized in that**
the split mold (3) is in connection with an external drive unit for the radial movement of the slits (4, 5, 6) in the closing and opening position.

13. Device according to claims 9 to 12
**characterized in that**
the split mold (3) is mounted on the tool carrier unit or the slit of a multiple step press and at the slit or at the tool carrier unit an actuation element is assembled via which the slits (4, 5, 6) are radially displaceable.

14. Device according to one of claims 9 to 13
**characterized in that**
the blank (1) comprises an area which is subject to a further cold deformation and this area is configured such that it is suitable as a restraining area for a drilled chuck.

15. Device according to one of claims 9 to 14
**characterized in that**
the area of the blank (1) comprises a polygonal particularly hexagonal cross section.

## Revendications

1. Procédé de fabrication de pièces métalliques allongées pourvues de rainures hélicoïdales, en particulier des forets hélicoïdaux ou des vis sans fin, des rainures hélicoïdales (8) étant façonnées, par une opération de formage, dans une ébauche (1) préfabriquée en tant qu'élément de départ, sachant qu'il est prévu au moins une phase de formage (III) durant laquelle ladite ébauche (1) est introduite dans une matrice de guidage (9) et est ensuite mise en forme dans un outil (3) à mâchoires, muni d'au moins deux mâchoires mobiles (4, 5, 6) dont la paroi intérieure comporte au moins une région dotée d'un profilage (7) réalisé en tant que négatif, afin de former des rainures hélicoïdales (8), et sachant que, par l'intermédiaire d'un poinçon de pressage (13) mobile dans le sens axial et venant en prise avec l'extrémité libre de l'ébauche (1) située dans la matrice de guidage (9), ladite ébauche (1) est pressée, au moins en partie, à travers l'orifice central (17) de l'outil (3) à mâchoires à l'état fermé, des rainures hélicoïdales (8) étant alors façonnées par déformation plastique lors du contact avec le profilage (7) dudit outil, ledit outil (3) à mâchoires étant ouvert à l'achèvement de l'opération de pressage et l'ébauche (2) mise en forme étant enlevée de ce dernier, avec application de la force de fermeture destinée aux mâchoires (4, 5, 6) d'au moins l'un des outils de formage (3, 18, 21), ou de la force dédiée à la mise en mouvement du poinçon de pressage (13) par l'intermédiaire du coulisseau mobile de la presse à étages multiples,
**caractérisé par le fait**
- **que** la phase de formage (III), durant laquelle les rainures hélicoïdales (8) sont façonnées dans l'ébauche (1), est une phase (III) de formage à froid ;
- **qu'**au moins cette phase (III) de formage à froid s'effectue à l'intérieur d'une presse à étages multiples,
sachant qu'il est fait usage, en tant que matériau de départ pour constituer ladite ébauche (1), d'un fil métallique débité à longueur et déformé à froid au cours d'une ou plusieurs phase(s) d'extrusion ou de compression, pour procurer une ébauche (1), avec application de la force de fermeture destinée aux mâchoires (4, 5, 6) d'au moins l'un des outils (3, 18, 21) de formage à froid, ou de la force dédiée à la mise en mouvement du poinçon de pressage (13) par l'intermédiaire du coulisseau mobile de la presse à étages multiples.

2. Procédé selon la revendication 1, **caractérisé par le fait que** le fût (11) et/ou la tête (20) de l'ébauche (1) est (sont) préformé(e)(s) au cours de phases supplémentaires précédentes (I, II) de formage à froid.

3. Procédé selon l'une des revendications 1 ou 2, **caractérisé par le fait que**, lors de la déformation de l'ébauche (1) au cours de phases précédentes (I, II) de formage à froid, ladite ébauche (1) est guidée, au moins par zones, dans une autre matrice de guidage (9) et la force nécessaire de mise en forme est engendrée par mouvement axial du poinçon de pressage (13).

4. Procédé selon l'une des revendications 1 à 3, **caractérisé par le fait que** la région (19) de l'ébauche (1), dans laquelle les rainures hélicoïdales (8) sont formées, est déformée au cours d'une phase précédente (I) de formage à froid.

5. Procédé selon l'une des revendications 1 à 4, **caractérisé par le fait que** la région (19) de l'ébauche (1), dans laquelle les rainures hélicoïdales (8) sont formées, est déformée pour passer d'une configuration de section transversale circulaire à une configuration de section transversale (20) elliptique ou du type trou oblong.

6. Procédé selon l'une des revendications 1 à 5, **caractérisé par le fait que** les rainures hélicoïdales (8) sont formées durant une phase (III) de formage à froid, au cours d'une étape opératoire, avec réduction de la section transversale de la tête (20) de l'ébauche (1).

7. Procédé selon l'une des revendications 1 à 6, **caractérisé par le fait que** la section transversale de la partie inférieure de l'ébauche (1) est déformée au cours de l'une (II) des phases précédentes de formage à froid, notamment pour procurer une région (20) dépourvue de rainures hélicoïdales ou de spirales, et un court fragment (8a) d'une spirale ou d'une volute est formé dans la région voisine (19a), l'orifice central de sortie de l'outil (21) à mâchoires étant occulté ou fermée au moyen d'une pièce complémentaire (22) au cours du formage à froid.

8. Procédé selon l'une des revendications 1 à 7, **caractérisé par le fait que** l'ébauche (1) présente une zone non soumise à déformation à froid supplémentaire, ou bien ladite ébauche comporte, à l'issue du façonnage de la spirale, une zone soumise à une déformation à froid, laquelle zone est réalisée de façon telle qu'elle se prête en tant que zone d'enserrement d'un mandrin de perçage ou d'un adaptateur.

9. Dispositif dévolu à la mise en oeuvre du procédé conforme à l'une des revendications 1 à 8, comprenant au moins une unité de formage (III) composée d'une matrice de guidage (9) pourvue d'un orifice central (10) réalisé pour recevoir une ébauche (1) ; d'un outil (3) à mâchoires, muni d'au moins deux mâchoires mobiles (4, 5, 6) pouvant être mues vers des positions d'ouverture et de fermeture ; et d'un poinçon de pressage (13) mobile axialement et pouvant être introduit dans ledit orifice central (10) de ladite matrice de guidage (9), sachant que lesdites mâchoires (4, 5, 6) sont bloquées à demeure, dans la position de fermeture, par une force de retenue de grandeur variable, et qu'au moins une région dotée d'un profilage (7) réalisé en tant que négatif, afin de former des rainures hélicoïdales (8), est située sur la paroi intérieure desdites mâchoires (4, 5, 6), ladite unité (III) de formage à froid étant logée à l'intérieur d'une presse à étages multiples, pourvue d'une unité fixe de support d'outillage et d'un coulisseau mobile en direction de ladite unité de support d'outillage,
**caractérisé par le fait**
- **que** ledit dispositif est une presse à étages multiples, pourvue d'une unité fixe de support d'outillage et d'un coulisseau mobile en direction de ladite unité de support d'outillage ;
- **que** l'unité de formage (III) à présence minimale, composée de la matrice de guidage (9), de l'outil (3) à mâchoires et du poinçon de pressage (13), est une unité (III) de formage à froid logée à l'intérieur de ladite presse à étages multiples ;
- **qu'**au moins un outil supplémentaire d'extrusion ou de compression est additionnellement disposé dans ladite presse à étages multiples.

10. Dispositif selon la revendication 9, **caractérisé par le fait que** l'extrémité inférieure de l'outil (3) à mâchoires présente une région (20) à pas réduit, en vue de former la tête (20).

11. Dispositif selon l'une des revendications 9 ou 10, **caractérisé par le fait que** l'une (I) des unités de formage à froid, implantées en amont, est dotée d'un outil (18) en plusieurs parties qui présente un profilage intérieur réalisé pour modifier la configuration de section transversale de la région (19) de l'ébauche (1) vouée au formage à froid.

12. Dispositif selon l'une des revendications 9 à 11, **caractérisé par le fait que** l'outil (3) à mâchoires est en liaison avec une unité extérieure d'entraînement, en vue du mouvement radial desdites mâchoires (4, 5, 6) vers les positions de fermeture et d'ouverture.

13. Dispositif selon l'une des revendications 9 à 12, **caractérisé par le fait que** l'outil (3) à mâchoires est monté soit sur l'unité de support d'outillage, soit sur le coulisseau d'une presse à étages multiples, un élément d'actionnement, par l'intermédiaire duquel des coulissements peuvent être imprimés auxdites mâchoires (4, 5, 6) dans le sens radial, étant implanté sur ledit coulisseau ou sur ladite unité de support d'outillage.

14. Dispositif selon l'une des revendications 9 à 13, **caractérisé par le fait que** l'ébauche (1) présente une zone soumise à une déformation à froid supplémentaire, laquelle zone est réalisée de façon telle qu'elle se prête en tant que zone d'enserrement d'un mandrin de perçage.

15. Dispositif selon l'une des revendications 9 à 14, **caractérisé par le fait que** la zone de l'ébauche (1) présente une section transversale polygonale, notamment hexagonale.
